# DEMANDE DE BREVET EUROPEEN

(11) **EP 1 293 718 A2**
(43) Date de publication de la demande: **19.03.2003**
(21) Numéro de dépôt: 02292114.2
(22) Date de dépôt: 28.08.2002
(51) Int. Cl.: F16L 47/00

(54) **Tuyau coude, produit intermediaire en forme de tuyau rectiligne et procede pour couder ce produit intermediaire**

(30) Priorité: 04.09.2001 FR 0111410
(71) Demandeur: Nobel Plastiques, 51300 Marolles (FR)
(72) Inventeur: Dabouineau, Johann, 51000 Chalons en Champagne (FR)
(74) Mandataire: Lavialle, Bruno

(57) **Abrégé**

L'invention concerne un tuyau comportant au moins un coude, le tuyau (1) comprenant au moins deux annelures (7) adjacentes au niveau du coude et un moyen de liaison (6) des annelures l'une à l'autre d'un côté intérieur du coude.

L'invention concerne en outre des produits intermédiaires pour la réalisation du tuyau coudé ci-dessus.

L'invention a également pour objet un procédé pour former un coude sur un tel produit intermédiaire.

## Description

La présente invention concerne un tuyau coudé utilisable par exemple pour former une canalisation de transport de fluides. Ce tuyau est notamment destiné aux véhicules automobiles pour équiper le circuit de refroidissement du moteur thermique de celles-ci. L'invention a également pour objet un produit intermédiaire en forme de tuyau rectiligne et un procédé pour couder ce produit intermédiaire.

Il est connu de réaliser des canalisations de transport de fluide en matériau thermoplastique à partir d'un tube annelé ou semi-annelé ayant une souplesse suffisante pour être courbé afin de respecter un trajet pré-défini dans l'environnement-moteur du véhicule. Ces tubes sont généralement réalisés au moyen d'une machine d'extrusion à la sortie de laquelle ils se présentent sous une forme rectiligne avant d'être coudés et formés à chaud. Toutefois, ces tubes annelés présentent de forts allongements sous l'action combinée de la température et d'une sollicitation mécanique telle que la pression du fluide transporté ou telle qu'une traction exercée sur le tube. En outre, ces tubes, qui sont généralement monocouches en polyamide 12, sont relativement onéreux.

Selon l'invention, on propose un tuyau qui a une grande souplesse au formage pour réaliser des angles et des rayons très serrés et qui présente un allongement faible des zones annelées après formage.

Le tuyau conforme à l'invention comporte au moins un coude, au moins deux annelures adjacentes au niveau du coude et un moyen de liaison des annelures l'une à l'autre d'un côté intérieur du coude.

Ainsi, la liaison des annelures entre elles assure la conservation de la géométrie du coude même lorsque des contraintes sont exercés sur le tuyau, en s'opposant à toute variation de la distance séparant celles-ci.

Selon un premier mode de réalisation, les annelures sont soudées l'une sur l'autre du côté intérieur du coude.

La liaison des annelures entre elles peut alors être réalisée sans nécessiter l'apport d'éléments extérieurs au tuyau et donc sans alourdir celui-ci. Ce mode de réalisation est en outre particulièrement simple.

Selon un deuxième mode de réalisation, le tuyau comprend un tube extérieur s'étendant au moins sur le coude et possédant des portions de surface interne fixées aux annelures.

La liaison ainsi assurée entre les annelures est particulièrement résistante.

L'invention concerne en outre des produits intermédiaires pour la réalisation des tuyaux coudés cidessus.

L'invention a également pour objet un procédé pour former un coude sur un produit intermédiaire comprenant un tuyau sensiblement rectiligne comportant une couche externe en un matériau qui a une température de ramollissement prédéterminée et qui est apte à se souder sur lui-même à une température supérieure ou égale à cette température de ramollissement, le procédé comprenant les étapes de :
- couder ce tuyau et chauffer la zone coudée à une température de ramollissement superficiel du tuyau pour amener les annelures adjacentes au contact l'une de l'autre du côté de celles-ci intérieur au coude de manière qu'elles se soudent sur elles-mêmes,
- refroidir le tuyau, les annelures étant de préférence maintenues en contact les unes contre les autres durant le refroidissement.

L'action combinée du chauffage et de la courbure du tuyau permet de réaliser la liaison entre les annelures sans nécessiter d'opérations supplémentaires.

L'invention a également pour objet un procédé pour former un coude sur un produit intermédiaire comprenant un tuyau sensiblement rectiligne comportant un tube intérieur présentant des annelures et un tube extérieur lisse coaxiaux, le tube extérieur étant en un matériau thermorétractable qui est apte à se souder sur la surface externe du tube interne et possède dans un état rétracté un diamètre interne au plus égal au diamètre externe du tube intérieur et dans un état expansé un diamètre interne supérieur au diamètre externe du tube intérieur, le procédé comprenant les étapes de :
- couder ce tuyau et chauffer la zone coudée pour provoquer une rétraction du tube extérieur et un ramollissement de la surface interne dù tube extérieur de manière à souder des portions de la surface interne du tube extérieur sur les annelures du tube intérieur,
- refroidir le tuyau.

Ainsi, la mise en place du tube extérieur sur le tube intérieur préalablement à la rétraction est aisé. En outre, lors de la rétraction, l'élasticité du tube extérieur tend à appliquer la surface interne de celui-ci contre les annelures du tube intérieur, ce qui facilite la soudure des portions de surface interne sur les annelures.

De préférence, le tube extérieur comprend une couche interne en un matériau ayant une température de ramollissement prédéterminée et une couche externe en un matériau ayant une température de thermorétraction sensiblement égale à la température de ramollissement.

Une seule opération de chauffage assure alors la rétraction du tube extérieur et la soudure de celui-ci sur les annelures du tube intérieur.

D'autres caractéristiques et avantages de l'invention ressortiront à la lecture de la description qui suit de modes de réalisation particuliers non limitatifs de l'invention.

Il sera fait référence aux dessins annexés parmi lesquels :
- la figure 1 est une section transversale d'un tuyau selon un premier mode de réalisation de l'invention ;
- la figure 2 est une coupe longitudinale d'une portion coudée de ce tuyau ;
- la figure 3 est une section transversale du tube intérieur d'un tuyau selon un deuxième mode de réalisation de l'invention ;
- la figure 4 est une section transversale du tube extérieur de ce tuyau, dans un état expansé ;
- la figure 5 est une coupe longitudinale d'une portion coudée de ce tuyau.

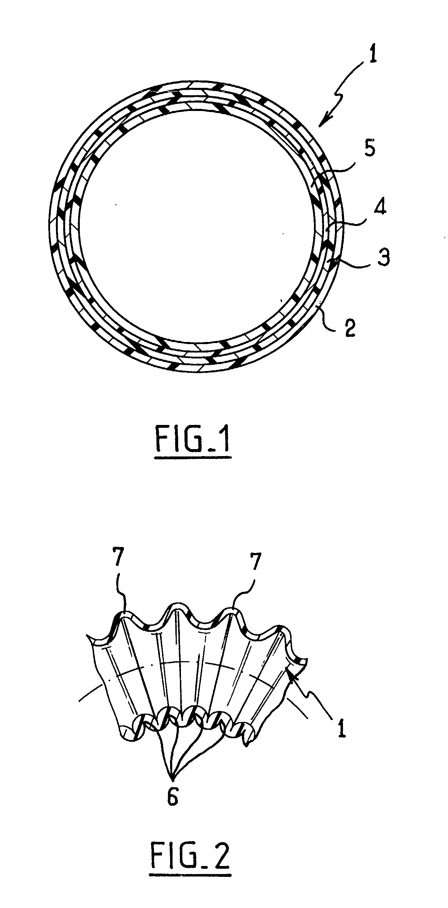

Conformément au premier mode de réalisation de l'invention et en référence plus particulièrement à la figure 1, le tuyau est généralement désigné en 1 et est de type annelé.

Le tuyau 1 est multicouche et comprend de l'extérieur vers l'intérieur des couches 2, 3, 4, 5 (on remarquera que ces couches ne sont pas détaillées sur la figure 2 pour des raisons de clareté de celle-ci).

La couche externe 2 est réalisée en un matériau soudable sur lui-même qui possède une température de ramollissement superficiel ou de soudure au contact prédéterminée. Ce matériau peut-être un thermoplastique élastomère comme un mélange de polypropylène, SEBS ou SBS avec de l'huile parafinique, ou tout autre matériau thermoplastique ayant des caractéristiques de soudabilité analogues par exemple un polyéthylène commun, un polyéthylène haute densité ou un polyéthylène basse densité. Ce matériau est ici un élastomère thermoplastique tel qu'un de ceux dont les références suivent :
- MULTIFLEX G85 ou G70 de la société MULTIBASE,
- TEFABLOC choisi parmi les catégories TO STD, TS STD, TE 500, 600, 700 ou 800, produit par la société LVM COUSIN TESSIER,
- BERGAFLEX produit par la société CTE M.A. HANNA COMPANY.

La couche 3 est réalisée en un matériau thermoplastique ayant des propriétés d'adhésion avec la couche 2 et présentant une température de ramollissement supérieure à celles de la couche externe 2. Ce matériau peut-être une polyoléfine comme un polypropylène par exemple du type MOPLEN EPD60R produit par la société MONTELL, ELTEX PHL 402 de la société SOLVAY, ou encore BA202 de la société BOREALIS.

La couche 4 est réalisée en un matériau thermoplastique compatible avec celui des couches 3 et 5 de manière à assurer la cohésion de ces couches. Ce matériau est par exemple une polyoléfine modifiée tel qu'un polypropylène greffé avec des fonctions chimiques compatibles avec la couche 5. Le matériau est ici choisi parmi ceux dont les références suivent :
- ADMER sélectionné dans les catégories QF550E, QB510E, AT843E, AT1190E, AT1657E, AT1658E, QF551E de la société MITSUI CHEMICALS,
- GRILON XE3153 ou CR8E de la société EMS CHEMIE,
- BYNEL de la série 5000 et en particulier 50E571 ou 50E725 de la société DUPONT DE NEMOURS.

La couche interne 5 est en un matériau thermoplastique chimiquement résistant aux fluides véhiculés, tel qu'un polyamide 12 stabilisé à la glycolyse et l'hydrolyse, et par exemple un de ceux dont les références suivent :
- GRIMALID L25ANZ ou XE3721 de la Société EMS-CHEMIE,
- RILSAN du type A MA 4650, A M-AESN P210 T6L, ou A M-AESN P110 T6L de la société ATOFINA.

Cette structure multicouche permet notamment de limiter la quantité de polyamide utilisé et de maintenir un coût du tuyau peu élevé.

Le tuyau 1 est réalisé de manière connue en elle-même par coextrusion puis moulage en sortie de la machine d'extrusion.

En référence également à la figure 2, le tube est ensuite coudé puis formé à chaud.

Le matériau de la couche externe 2 possède une température de soudure au contact inférieure ou égale à la température de formage du tuyau et le matériau de la couche 3 et de préférence les matériaux des autres couches présentent une température de ramollissement supérieure à la température de formages du tuyau 1.

Du fait de la déformation du tube, les annelures 7 du tuyau 1 viennent au contact les unes des autres dans les zones 6 intérieures au coude. La pression résultant des mises en contact des annelures et la température de formage permettent alors à la couche externe 3 de fondre superficiellement et de se souder sur elle-même au niveau des zones 6. Les couches 3, 4 et 5 n'étant pas ramollies à la température de formage, elles conservent un module d'élasticité suffisant pour exercer la pression nécessaire à la soudure des annelures. En outre, le module d'élasticité étant conservé, l'épaisseur de ces couches n'est sensiblement pas affectée par ces opérations.

Il est ensuite procédé au refroidissement du tuyau 1. Durant le refroidissement, la pression des annelures les unes contres les autres est maintenue.

Le coude est ainsi figé et les soudures 6 empêchent la zone annelée de s'allonger.

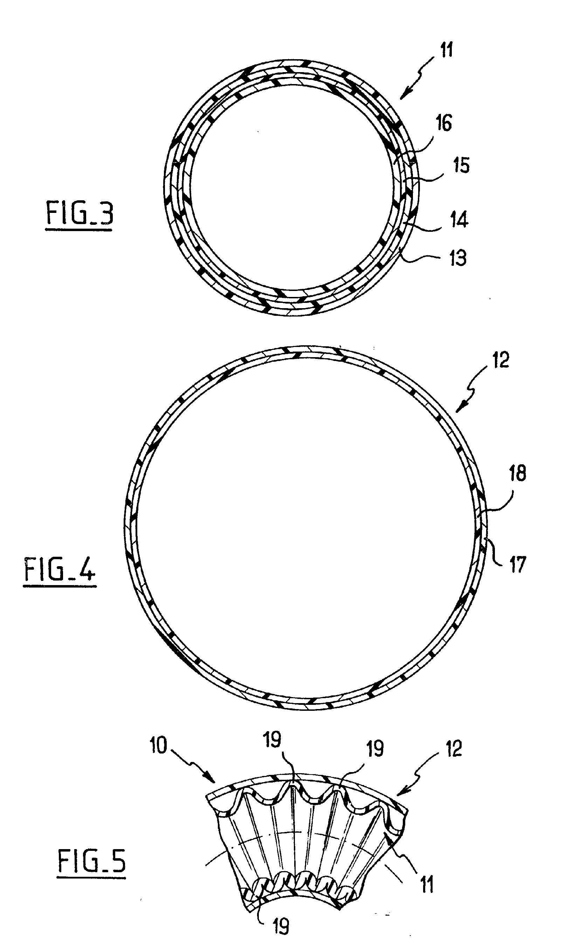

Conformément au deuxième mode de réalisation de l'invention et en référence aux figures 3 à 5, le tuyau 10 comporte un tube intérieur généralement désigné en 11 et un tube extérieur généralement désigné en 12.

En référence plus particulièrement à la figure 3, le tube intérieur 11 est annelé et du type multicouche.

Le tube intérieur 11 comprend de l'extérieur vers l'intérieur des couches 13, 14, 15, 16 (on remarquera que ces couches ne sont pas détaillées sur la figure 5 pour des raisons de clareté de celle-ci).

La couche externe 13 est réalisée en un matériau soudable qui possède une température de ramollissement superficiel ou de soudure au contact prédéterminée. Ce matériau peut-être un thermoplastique élastomère comme un mélange de polypropylène, SEBS ou SBS avec de l'huile parafinique, ou tout autre matériau thermoplastique dont les caractéristiques de soudabilité sont analogues par exemple un polyéthylène commun, un polyéthylène haute densité ou un polyéthylène basse densité. Ce matériau est ici un élastomère thermoplastique tel qu'un de ceux dont les références suivent :
- MULTIFLEX G85 ou G70 de la société MULTIBASE,
- TEFABLOC choisi parmi les catégories TO STD, TS STD, TE 500, 600, 700 ou 800, produit par la société LVM COUSIN TESSIER,
- BERGAFLEX produit par la société CTE M.A. HANNA COMPANY.

La couche 14 est réalisée en un matériau thermoplastique ayant des propriétés d'adhésion avec la couche 13 et présentant une température de ramollissement supérieure à la température de ramollissement de la couche externe 12. Ce matériau peut-être une polyoléfine comme un polypropylène par exemple du type MOPLEN EPD60R produit par la société MONTELL, ELTEX PHL 402 de la société SOLVAY, ou encore BA202 de la société BOREALIS.

La couche 15 est réalisée en un matériau thermoplastique compatible avec les couches 14 et 16 de manière à assurer la cohésion de ces couches. Ce matériau est par exemple une polyoléfine modifiée tel qu'un polypropylène greffé avec des fonctions chimiques compatibles avec la couche 16. Le matériau est ici choisi parmi ceux dont les références suivent :
- ADMER sélectionné dans les catégories QF550E, QB510E, AT843E, AT1190E, AT1657E, AT1658E, QF551E de la société MITSUI CHEMICALS,
- GRILON XE3153 ou CR8E de la société EMS CHEMIE,
- BYNEL de la série 5000 et en particulier 50E571 ou 50E725 de la société DUPONT de NEMOURS.

La couche 16 est en un matériau thermoplastique chimiquement résistant aux fluides véhiculés, tel qu'un polyamide 12 stabilisé à la glycolyse et l'hydrolyse, et par exemple un de ceux dont les références suivent :
- GRIMALID L25ANZ ou XE3721 de la Société EMS-CHEMIE,
- RILSAN du type A MA4650, AM-AESN P210 T6L, ou AM-AESN P110 T6L de la société ATOFINA.

En référence plus particulièrement à la figure 4, le tube extérieur 12 est lisse et comprend une couche externe 17 et une couche interne 18 (on remarquera que ces couches ne sont pas détaillées à la figure 5 pour des raisons de clareté de celle-ci).

La couche externe 17 est formée par un matériau thermorétractable ayant une base oléfinique compatible en extrusion avec le matériau de la couche interne 18.

La couche interne 18 est formée par un matériau compatible en coextrusion avec la couche externe 17, et compatible en soudure à chaud avec le matériau de la couche externe 13 du tube intérieur 11. La couche interne 18 peut-être réalisée dans un matériau thermoplastique élastomère tel qu'un de ceux pouvant constituer la couche externe 13.

Le tube extérieur 12 possède dans son état expansé (visible sur la figure 4) un diamètre interne supérieur au diamètre externe du tube intérieur 11 et dans un état rétracté un diamètre interne inférieur au diamètre externe du tube intérieur 11.

Le procédé de réalisation du tuyau 10 consiste à réaliser séparément par coextrusion les tubes intérieur 11 et extérieur 12. Le tube intérieur 1 est obtenu de manière connue en elle-même par coextrusion puis moulage en sortie de la machine d'extrusion.

Puis, le tube extérieur 12 est enfilé sur le tube intérieur 11. L'ensemble ainsi formé est ensuite placé dans le moule de formage.

Le formage à chaud est réalisé à une température supérieure ou égale à la température de soudure des couches 13 et 18 et à une température supérieure à la température de thermorétraction du tube extérieur 2. Le matériau de la couche 14 et de préférence les matériaux des autres couches 15 et 16 présentent une température de ramollissement supérieure à la température de formage du tuyau 10.

Pendant le formage, le tube extérieur 12 se rétracte sur le tube intérieur 11 (voir la figure 5) et les couches 13 et 18 se soudent l'une sur l'autre par les effets combinés de la température et de la pression exercée par la rétraction du tube extérieur 12. Les annelures 19 sont alors soudées à la surface interne de la couche interne 18 du tube extérieur 12.

Après refroidissement, l'ensemble est lié par la soudure. Le tube extérieur 12 joue le rôle d'un élément de blocage de l'allongement des zones annelées sous l'effet de la pression du fluide à l'intérieur de la canalisation.

En variante, la couche externe 13 est réalisée en un matériau soudable sur lui-même de sorte que les annelures 19 du tube intérieur 11 se soudent les unes contre les autres pendant le formage de façon analogue au premier mode de réalisation.

Bien entendu, l'invention n'est pas limitée au mode de réalisation décrit et on peut y apporter des variantes de réalisation sans sortir du cadre de l'invention tel que défini par les revendications.

En particulier, par annelure on entendra des annelures s'étendant soit sur toute la circonférence du tuyau soit sur une partie de celle-ci seulement. De même, le tuyau peut être annelé sur toute sa longueur ou seulement sur une partie de celle-ci, au niveau du coude.

En outre, le tuyau conforme à l'invention peut résulter d'une inversion cinématique des modes de réalisation décrits, c'est-à-dire que les annelures peuvent être reliées d'un côté extérieur du coude afin d'empêcher leur rapprochement de manière à maintenir la courbure du coude.

De plus, les annelures peuvent être collées les unes aux autres au lieu d'être soudées.

Une gouttière de liaison des annelures peut être utilisée aux lieu et place du tube extérieur thermorétractable.

## Revendications

1. Tuyau comportant au moins un coude, **caractérisé en ce que** le tuyau (1, 11) comprend au moins deux annelures (7, 19) adjacentes au niveau du coude et un moyen de liaison (6) des annelures l'une à l'autre d'un côté intérieur du coude.

2. Tuyau selon la revendication 1, **caractérisé en ce que** les annelures (7, 19) sont soudées l'une sur l'autre du côté intérieur du coude.

3. Tuyau selon la revendication 1, **caractérisé en ce que** les annelures (7, 19) sont collées l'une sur l'autre du côté intérieur du coude.

4. Tuyau selon l'une quelconque des revendications 1 à 3, **caractérisé en ce qu'**il comprend un tube extérieur (12) s'étendant au moins sur le coude et possédant des portions de surface interne fixées aux annelures (7, 19).

5. Produit intermédiaire pour la réalisation d'un tuyau selon la revendication 2, **caractérisé en ce qu'**il comprend un tuyau (1) sensiblement rectiligne comportant une couche externe (2) en un matériau qui a une température de ramollissement prédéterminée et qui est apte à se souder sur lui-même à une température supérieure ou égale à cette température de ramollissement.

6. Produit intermédiaire selon la revendication 5, **caractérisé en ce que** le tuyau (1) est multicouche et comprend au moins une couche (3, 4, 5) ayant une température de ramollissement supérieure à la température de ramollissement de la couche externe (2).

7. Produit intermédiaire pour la réalisation d'un tuyau selon la revendication 4, **caractérisé en ce qu'**il comprend un tuyau (10) sensiblement rectiligne comportant un tube intérieur (11) présentant des annelures (19) et un tube extérieur (12) lisse coaxiaux et **en ce que** le tube extérieur est en un matériau thermorétractable qui est apte à se souder sur la surface externe du tube interne et possède dans un état rétracté un diamètre interne au plus égal au diamètre externe du tube intérieur et dans un état expansé un diamètre interne supérieur au diamètre externe du tube intérieur.

8. Produit intermédiaire selon la revendication 7, **caractérisé en ce que** le tube extérieur (12) comprend une couche interne (18) en un matériau ayant une température de ramollissement prédéterminée et une couche externe (17) en un matériau ayant une température de thermorétraction sensiblement égale à la température de ramollissement.

9. Produit intermédiaire selon la revendication 7 ou la revendication 8, **caractérisé en ce que** le tube intérieur (11) comprend une couche externe (13) en un matériau apte à se souder sur lui-même.

10. Procédé pour former un coude sur un tuyau formant un produit intermédiaire selon la revendication 5 ou la revendication 6, **caractérisé en ce que** le procédé comprend les étapes de
- couder ce tuyau (1) et chauffer la zone coudée à une température de ramollissement superficiel du tuyau de manière à amener les annelures (7) au contact les unes des autres du côté de celles-ci intérieur au coude de manière qu'elles se soudent sur elles-mêmes,
- refroidir le tuyau.

11. Procédé selon la revendication 10, **caractérisé en ce que** les annelures (7) sont maintenues en contact les unes contre les autres durant le refroidissement.

12. Procédé pour former un coude sur un tuyau formant un produit intermédiaire selon l'une quelconque des revendications 7 à 9, **caractérisé en ce que** le procédé comprend les étapes de :
- couder ce tuyau (10) et chauffer la zone coudée pour provoquer une rétraction du tube extérieur (12) et un ramollissement de la surface interne du tube extérieur de manière à souder des portions de la surface interne du tube extérieur sur les annelures (19) du tube intérieur,
- refroidir le tuyau.

13. Procédé selon la revendication 12, **caractérisé en ce que** pendant le chauffage les annelures (19) sont amenées au contact les unes des autres du côté de celles-ci intérieur au coude de manière qu'elles se soudent sur elles-mêmes.
